Europäisches Patentamt

(19) European Patent Office

Office européen des brevets

(11) Publication number: **0 026 548**
**A1**

(12) # EUROPEAN PATENT APPLICATION

(21) Application number: **80200912.6**

(22) Date of filing: **26.09.80**

(51) Int. Cl.³: **G 08 C 17/00**
**G 01 S 13/74**

(30) Priority: **28.09.79 NL 7907250**

(43) Date of publication of application:
**08.04.81 Bulletin 81/14**

(84) Designated Contracting States:
**AT BE CH DE FR GB IT LI LU NL SE**

(71) Applicant: **Groot Koerkamp, Hendrikus Johannes Maria**
**Kopermolenweg 25**
**NL-7382 BT Klarenbeek(NL)**

(72) Inventor: **Groot Koerkamp, Hendrikus Johannes Maria**
**Kopermolenweg 25**
**NL-7382 BT Klarenbeek(NL)**

(74) Representative: **van der Beek, George Frans, Ir. et al,**
**Nederlandsch Octrooibureau P.O. Box 29720**
**NL-2502 LS The Hague(NL)**

(54) **An object control system.**

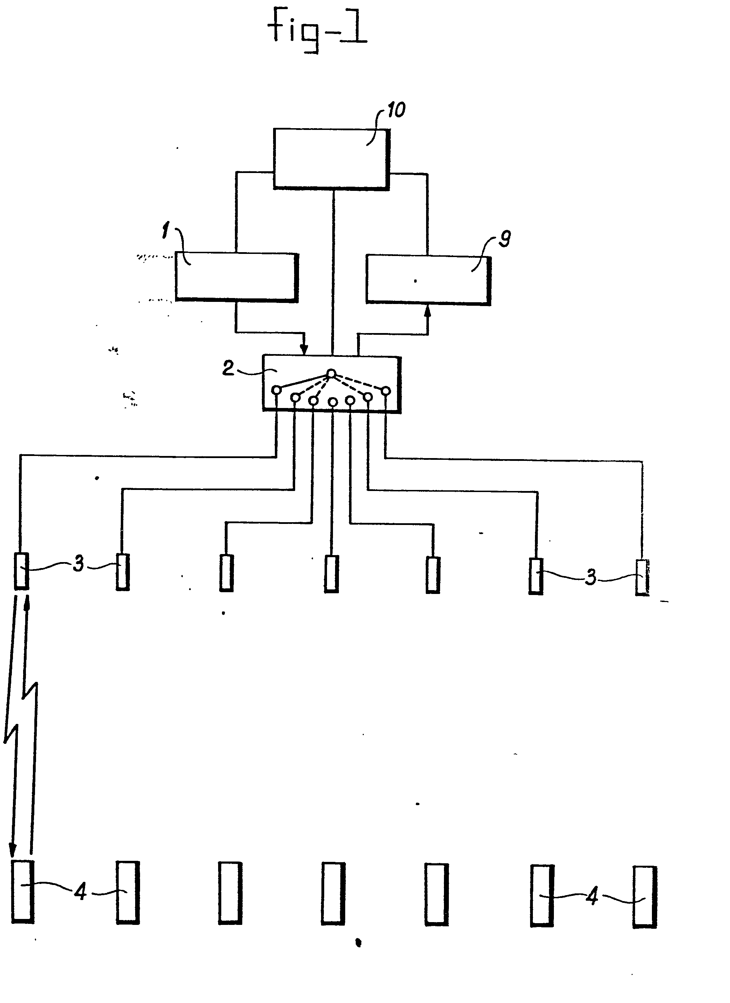

(57) An object control system comprising a central control unit (10), a high frenquency transmission generator (1), a control switching unit (2), a plurality of radiators (3) for high frequency radiation and a plurality of control units (4) at a distance from the radiators, each unit being associated to an object to be controlled; whereby the high frequency generator (1) has an adjustable power setting and each control unit (4) has an adjustable detection sensitivity; whereby each radiator (3) there upon is provided with a disconnecting member; and whereby the control switching unit in its switching operation is implemented in combination with the disconnecting members of the radiators such that at a point of time substantially only a selected radiator is supplied with high frequency energy, while the disconnecting operation of the disconnecting member associated with said radiator is removed, and the non-selected radiators are choked by the maintained disconnection operation of their disconnecting members (fig.1).

./...

fig-1

An object control system.

The invention relates to an object control system comprising a central control unit, a high frequency transmission generator, a control switching unit, a plurality of radiators for high frequency radiation, and a plurality of control units at a distance from the radiators, each control unit being associated with an object to be controlled. Such object control systems are known in practice.

In such an object control system, high frequency energy is applied from the high frequency transmission generator to a plurality of radiators via the control switching unit. These radiators when being controlled emit high frequency energy to a plurality of control units being at a distance from the radiators. The high frequency radiation received by a control unit when exceeding the detection threshold will cause a reaction in the control unit, whereupon this unit will implement its pre-instructed task.

A problem which occurs often in practice is the cross talk of high frequency energy between the radiators. This cross talk may occur in the control switching unit or between the radiators due to the fact that the radiators are to close to each other. By a correct positioning of each radiator with respect to the others this last cause of cross talk can be obviated.

A selective object control system is used in order to obtain an unambiguous activation and if required to enable an object localisation. When the maximum available high frequency for a selected radiator is reduced in the central control switching unit due to cross talk or for another reason so that a portion of the high frequency signal energy lands in other radiators, an activation of a control unit being opposite to a non-selected radiator will take place in dependency of the distance.

Such a cross talk may be avoided by using a completely unambiguous selecting control switching unit or by observing an unsafe area around each radiator. Said last measure in many cases is not useful especially when the control units are movable.

The degree of cross talk is dependent on the amount of high frequency energy applied from the high frequency transmission generator via the control switching unit which amount is dependent on the power setting of the high-frequency transmission generator. The activation distance, that means the distance to the radiator, in which the control unit may be activated by the incoming signal upon exceeding its detection threshold, depends on the power setting of the high frequency transmission generator. The cross talk usâly occurs during the switching operation in the control switching unit as it is difficult to switch high-frequency energy. Only with the aid of a complicated and bulky control switching unit a complete decoupling of the selected radiator with respect to the other non-selected radiators may be obtained with the aid for example of coaxial switches.

The invention aims at providing an object control system which includes a very simple and compact control switching unit by which a complete unambiguous controlling operation and a certain controlling distance is obtained while using the maximum admissable high-frequency energy.

This aim in accordance with the invention is obtained with an object control system of the above mentioned type by providing the high frequency transmission generator with an adjustable power setting, and providing each control unit with an adjustable detection sensitivity; whereby each radiator has a disconnecting member; and whereby the control switching unit in its switching operation in combination with the disconnecting members of the radiators is embodied such that high frequency energy is only applied at one time in essence to only one selected radiator, while the disconnecting operation of the disconnecting member associated with this radiator is ended and the non-selected radiators are choked by the maintained disconnecting operation of their disconnecting members.

In the implementation according to the invention of the object control system the high frequency energy being applied by cross talk in the control switching unit to a non-selected radiator, therefore is lead away by the choking operation of the associated disconnecting member and will not be emitted.

With the aid of the invention each radiator in case it is not selected, may be damped or choked. For choking a non-selected radiator use is made of the principle that each well functioning radiator is tuned to a certain frequency, and said radiator will not function or badly when being detuned.

In an advantageous embodiment according to the invention the control switching unit is a very compact and simple high frequency multiplexer which applies the high frequency signal to the selected radiators, whereby each radiator includes an energy transmission coil and a tuning coil with an adjusting element functioning as the disconnecting member, and whereby each control unit at least includes a receiving coil, a detection circuit being adjusted such that the control unit only within controlling distance to the selected radiator is enabled by its high frequency radiation, and a reaction circuit. The adjusting element of the tuning coil may be controlled from the multiplexer by a control voltage which is applied via a separate conductor or which is derived from the high frequency signal. Thereto the radiator for the activation of the adjusting element may have a supply source, like a lithium cell, which is switched by the control voltage. Hereby the adjusting element may be a voltage controlled capacitor or a capacitor which can be adjusted with the aid of an electronic or mechanical contact.

In an advantageous embodiment the radiator comprises a bar of ferrite. In a further advantageous embodiment each control unit includes also a power supply, such as a lithium cell, which is connected in the control unit such that the detection circuit is fed continuously and the reaction circuit is only fed during a reaction period following the exceeding of the detection switching threshold by the high frequency signal.

The object control system may be used for the control of a production and/or regulation process, in which the objects associated and connected with the control units are implemented as operating and/or controlling members of the process.

The object control system may also be used as an identification system for the identification of objects, such as living beings or things or articles, whereby the system additionally is provided with a receiving- and decoding circuit, whereby in each control unit the reaction circuit comprises a transmission circuit having a transmission coil and coding element which circuit upon being excited via the detection circuit supplies a code signal and whereby the control of the adjusting element of the tuning coil is such that the selected radiator upon activation by the high frequency signal is choked only after a period which is sufficient for the receipt on of the code signal. Such an identification system may be used advantageously for the identification of lifestock, such as cows in a stable, whereby the high frequency transmission generator is embodied and adjusted such that the high frequency power supplied to the radiator equals 200 mW, and that the detection circuit in the control unit with its sensitivety is embodied to a continuous current drain of 1 - 1.5 $\mu A$, such that the activation distance is 1 or 2 meters. In this case the relay associated with the mechanical contact of the adjusting element may be embodied such that it drops off with a delay. Also the central control unit may be embodied as a central processing unit.

The invention will be explained more in detail with reference to the drawings, in which:

Fig. 1 shows a schematical diagram of the object control system according to the invention;

Fig. 2 shows a schematical display of the unsafe zone associated with a radiator without disconnection member in case the radiator is not selected, and of the activation distance in case the radiator indeed is selected;

Fig. 3 shows a schematic view of the radiator according to the invention; and

Fig. 4 shows a diagram of an embodiment of a control unit.

In Fig. 1 the object control system comprises a high frequency transmission generator 1, a receiving and decoding circuit 9, a central control unit 10, a control switching unit 2, a radiator 3 for high frequency radiation, a control or activation unit 4 associated with the object to be controlled and being at some distance with respect to the radiator 3. The transmission generator 1 for example includes a 30 MHz oscillator which supplies impulses of 1 - 20 msec.

In such an object control system the avoidance of cross talk between the radiators is of major importance in order to obtain a system insensitive to disturbances and having the largest possible adjustable activation distance also by employing a construction, as compact as possible, and simple and cheap technical means. By positioning the radiators mutually in the correct manner cross talk from one radiator directly to another may be avoided.

An important source of cross talk however is the control switching unit 2, in which the high frequency power of the transmission generator 1 under control of the central control unit 10 is tranferred via the switch to a selected radiator. Only with the aid of an expensive implementation of the control switching unit, such as for example with the aid of coaxial and also bully switches this may be realized. However when a technically simple and compact control switching unit is applied one will have to accept a certain degree of cross talk in the switch, whereby this high frequency cross talk energy however in no case may initiate a undesired activation of an non-selected control unit. One requires a selective object control system for obtaining an unambiguous activation and if required an object localization.

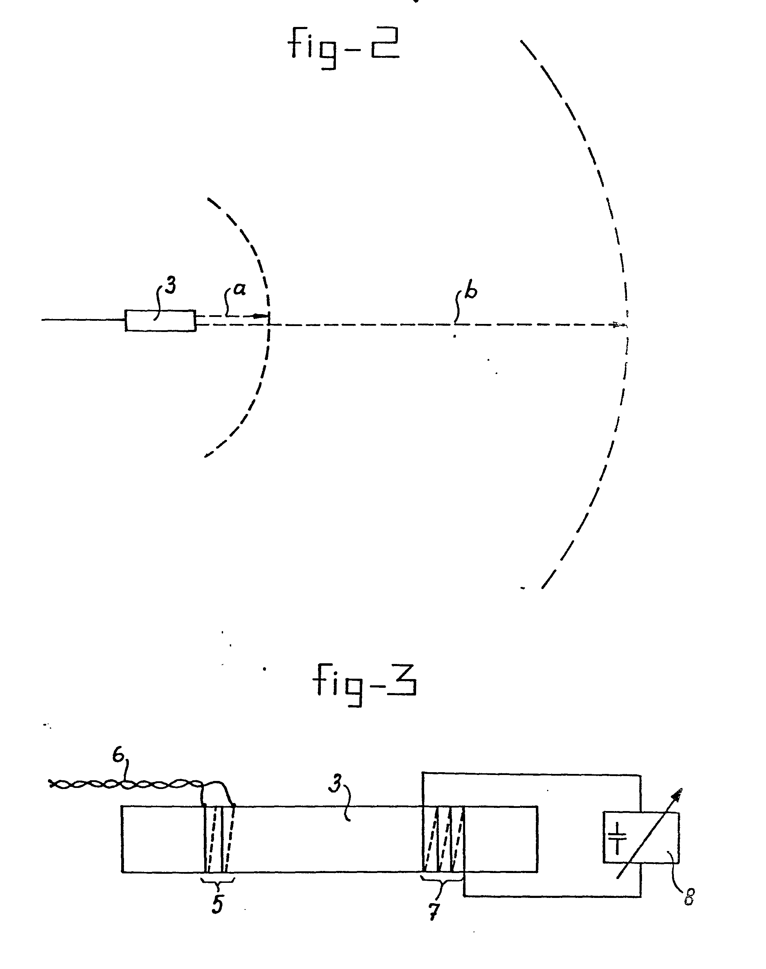

When the object switching unit is insufficiently decoupled and the non-selected radiator is not choked or insufficiently a portion of the energy destined for the selected radiator will land on a non-selected radiator and will be emitted. By this the activation may take place of the control unit being opposite a non-selected radiator. Such a undesired activation of a non-selected control unit may be avoided by observing an unsafe zone at each radiator. In Fig. 2 an unsafe zone a and a desired activation distance b is indicated for an arbitrary radiator. By reason of the high frequency cross talk energy applied to a non-selected radiator a control unit being in the unsafe zone may
also be activated. The magnitude of the unsafe zone obviously
is dependent on the adjustment of the high frequency transmission
generator, on the degree of cross talk, and on the detection
sensitivety of the control switching unit.

For certain applications, such as for control units associated with stationary objects, it may be workable to set an unsafe
zone in order to avoid therewith a false activation. However if
one has moving objects and therefore also moving control units,
the object has to stay at such a distance from the radiator that
the control unit will never enter the unsafe zone. In many cases
however this cannot be guaranteed in practice.

By taking care in accordance with the invention that the high
frequency cross talk energy applied to a non-selected radiator is
choked or damped at the radiator, an unsafe zone may be avoided.

By damping a non-selected radiator independent of the amount
of applied cross talk energy one attends to that this radiator
does not emit energy based on the principle that each well functioning radiator is tuned to a certain frequency. By adjusting this
tuning the radiator cannot or hardly emit any energy.

Fig. 3 shows an example of a radiator according to the invention, which comprises a bar of ferrite on which an energy
transmission coil having a supply lead 6 and a tuning coil 7 is
mounted. The tuning coil 7 is also tuned with the aid of the adjusting element 8 which for example may comprise a variable capacitor.

By a correct tuning of the tuning coil a selected radiator
may emit the high frequency energy supplied to it in a maximum
manner. The desadjustment or detuning in case of non-selection may
be realized by changing the number of windings of the tuning coil,
by changing the location of the tuning coil with respect to the
energy transmission coil, or by changes in the adjusting element by
which the tuning coil obtains a choking effect. Of these posibi-
lities a change in the adjusting element technically is the most
simple one.

The adjusting element may be implemented as a voltage controlled capacitor, or as an adjustable and/or fixed capacitor, which may be adjusted with the aid of an electronic or mechanical contact of a relay for example. The control of the adjusting may be realized for example by a control voltage which is applied via an additional lead or which is derived from the high frequency signal. For this a supply source, such as a lit-hium cell, may be taken up at the radiator, which source during the period of selection of the radiator may be switched by the control voltage of the additional lead or by the control voltage derived from the high frequency signal or by electromagnetic wireless radiation.

Such a radiator therefore has no unsafe zone in the control system, and may be embodied in a compact and cheap manner. The control units advantageously may be used in a production and/or controlling process, in which the control units after being activated by their reaction circuit can emit a signal by which information is transmitted. The central control unit 10 may be embodied as a processor. The control unit also may be used for the control of adjusting members, such as valves, switches, etc.

The activation distance between radiator and associated control unit(s), within which the emitted high frequency radiation may activate the control unit(s), is of great importance for the several possibilities of the system. Because of this activation distance also the number of control units in a certain space is determined as an unambigeous activation is required at all times.

When one starts from a maximum transmission of 200 mwatt according to the instructions, a disturbance insensitive object control system may be realized having a activation distance of 1 to 2 meters.

When this distance is sufficient use may be made of a control unit which is partially passive, which means that the continuous current drain of it is extremely low at a value of for example 1 to 1.5 $\mu$A. This is of great importance for the manner of supply of the control unit, which in many applications for example with moving objects has to be done by its own power supply. The control unit consists as indicated of a detection circuit having a receiving coil, and a following reaction circuit. Such a control unit advantageously may have a power supply such as for example 2 lithium cells, which feed the detection circuit continuously and feed the reaction circuit only during a certain reaction period following the exceeding of the detection threshold by the incoming signal. The reaction circuit therefore is switched in at a sufficiently strong input signal, and the circuit switches itself out after the end of the reaction period. Such a supply of these cells for example may function for a period of minimum ten years.

When a larger activation distance is required, the detection circuit of the control unit may be embodied in a more active manner for obtaining a larger activation distance in a disturbance insensitive control system, whereby the current drain of the control unit increases. Such a disturbance insensitive detection circuit at a larger activation distance goes at the expence of the life time of the power supply and therefore of a sealed compact control unit. By the larger activation distance also the mutual distance between two control units has to be maintained in a better manner in order to avoid that two control units are activated simultaneously. Because of the whole system becomes more expensive, more complicated and vulnerable.

It is of importance to implement the control distance in an adjustable manner by means of the setting of the power of the high frequency transmission generator and/or by adjusting the detection sensitivity in the control unit. Each control unit may obtain a certain detection threshold by reason of the adjustability of the detection sensitivity. The disadvantage is to some degree that the control units, which some time occur in larger numbers than the radiators, then will differ mutually.

The activation distance in a normal system embodiment may be made equal for each combination of radiator-control unit by embodying the high frequency transmission generator such that it can be adjusted.

0026548

-9-

In an advantageous embodiment of the control system according to the invention objects may be identified, such as living beings or articles. These articles for example may be moved in a production process or transportation process in accordance with a certain traject. The system advantageously may be also used for the identification of live-stock, such as for example cattle in a stable.

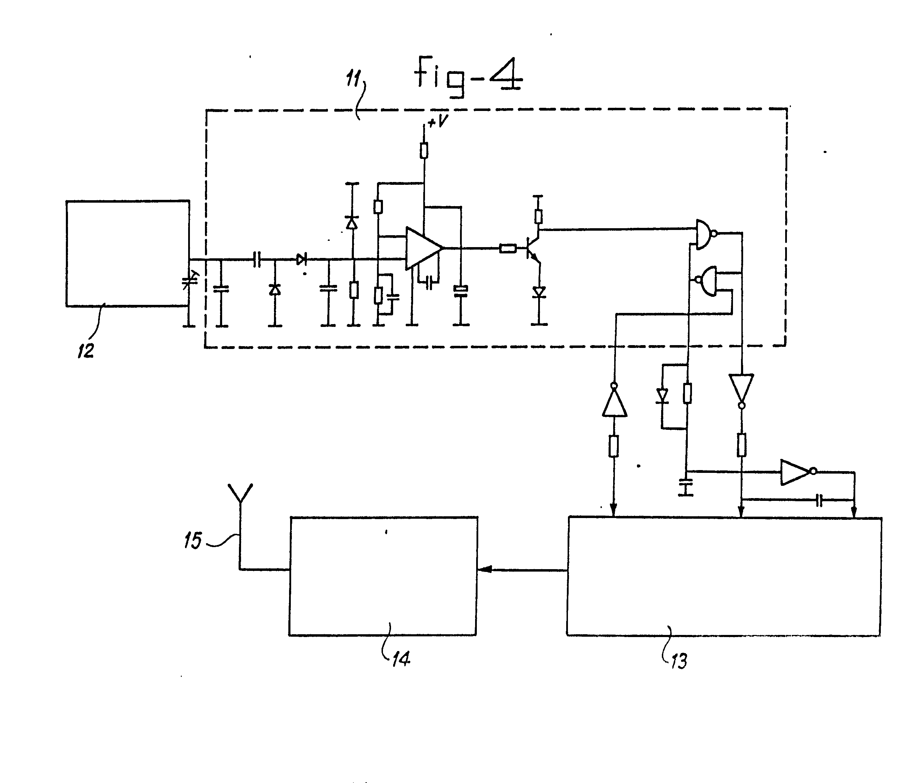

The control unit 3 according to Fig. 4 which is embodied for identification purposes, includes a detection circuit 11 having a receiving coil 12, and a reaction circuit consisting of a coder 13 and a transmission circuit 14 having an antenna or coil 13. In the coder 13 a coding associated with the certain object, for example a certain cow, is set. After activation, a coded signal may be emitted by this reaction circuit, which coded signal is received by the associated radiator or a central receiving antenna. In this manner information may be exchanged in the system. When in the system use is made of radiators having an adjusting element, it means that the radiator during the period of information exchange has to be tuned and should not be choked.

When control units having passive circuits are used, which means only a continuously switched-in detection circuit and a normally switched-out reaction circuit, whereby a long live time for the internal power supply stays guaranteed, a reasonable strong high frequency signal has to be emitted by the high frequency transmission generator. In this case the advantage is also that for activating the control unit by disturbing signals a relatively high disturbance level is required, by which also the activating distance is limited as the activation power is tied to a limit, such as 200 mwatt.

The activation distance in the control system in most cases is smaller than the distance across which a signal could be received.

In case two or more control units are activated by reason of cross talk via high frequency energy the following now may occur:

The information emitted by the relative control unit and having the largest signal amplitude will then be recognized as the only true information by the receiving- and decoding circuit 9 of the control system. In this state two or more control units will be activated and controlled simultaneously, only one of which is opposite the selected radiator.

However, a plurality of control units may also be activated simultaneously, of which control units no one is opposite the selected radiator. The receiver then may receive false information from a control unit which is activated by reason of cross talk.

In order to avoid above mentioned problems one has to take care that a control unit in all certainty may only be activated by a selected radiator.

(claims)

## C L A I M S .

1. An object control system comprising a central control unit, a high frequency transmission generator, a control switching unit, a plurality of radiators for high frequency radiation and a plurality of control units at a distance from the radiators, each unit being associated to an object to be controlled; whereby the high frequency generator has an adjustable power setting and each control unit has an adjustable detection sensitivity; whereby each radiator thereupon is provided with a disconnecting member; and whereby the control switching unit in its switching operation is implemented in combination with the disconnecting members of the radiators such that at a point of time substantially only a selected radiator is supplied with high frequency energy, while the disconnecting operation of the disconnecting member associated with said radiator is removed, and the non-selected radiators are choked by the maintained disconnection operation of their disconnecting members.

2. An object control system according to claim 1, c h a r a c- t e r i z e d   i n   t h a t the control switching unit is a very compact and simple high frequency multiplexer which supplies the high frequency signal in succession to the radiators, that each radiator includes an energy transmission coil and a tuning coil with adjusting element which functions as the disconnecting member, and that each control unit includes at least one receiving coil, a detection circuit which is adjusted such that the control unit is activated by the selected radiator only within activating distance, and a reaction circuit.

3. A object control system according to claim 2, c h a r a c- t e r i z e d   i n   t h a t   the adjusting element of the tuning coil is controlled from the multiplexer by a control voltage which is supplied via a separate lead or which is derived from the high frequency signal, by which the adjusting element deadjusts or detunes the tuning coil.

4. An object control system according to claim 3, c h a r a c - t e r i z e d   i n   t h a t the radiator includes a power supply destined for the activation of the adjusting element, such as a lithium cell which is switched by the control voltage.

5. An object control system according to claim 2, 3 or 4, c h a r a c t e r i z e d   i n   t h a t the adjusting element is a voltage controlled capacitor.

6. An object control system according to claim 2, 3 or 4, c h a r a c t e r i z e d   i n   t h a t the adjusting element is a capacitor which may be adjusted with the aid of an electronic or mechanical contact.

7. An object control system according to one of the preceding claims, c h a r a c t e r i z e d   i n   t h a t the radiator comprises a bar of ferrite.

8. An object control system according the one of the claims 2 to 7, c h a r a c t e r i z e d   i n   t h a t  each control unit includes also a power supply, such as a lithium cell, which is circuited in the control unit such that the detection circuit is fed continuously and the reaction circuit is only fed during a reaction period following the exceeding of the detection circuit threshold by the high frequency signal.

9. An object control system according to one of the preceding claims, to be used for the control of a production and/or controlling process, in which the objects associated and connected with the control units are embodied as operation and/or controlling members.

10. An object control system according to one of the claims 1 - 8, to be used as identification system for the identification of objects, such as living beings or articles, provided with a receiving and decoding circuit, whereby in each control unit the reaction circuit comprises a transmission circuit with transmission coil and coding element for supplying a code signal after activation via the detection circuit, and whereby the control of the adjusting element of the tuning coil is such that the selected radiator after being activated by the high frequency signal is choked only after a time period which is sufficient for the receipt of the code signal.

11. An object control system according to claim 10, c h a - r a c t e r i z e d   i n   t h a t  a central receiving antenna is mounted for the reception of signals emitted by the control units after activation.

12. An object control system according to claim 10 or 11 for the identification of lifestock, such as cows in a stable, c h a r a c t e r i z e d  i n  t h a t  the high frequency transmission generator is embodied and adjusted such that the high frequency power supplied to a radiator amounts to 250 mwatt, and that the detection circuit in the control unit with its sensitivity is embodied with a continuous current drain of 1 - 1.5 uA such that the activating distance amounts to 1 - 2 meters.

13. An object control system according to claim 10, 11 or 12, c h a r a c t e r i z e d  i n  t h a t  the relay associated with the mechanical contact of the adjusting element drops off with a delay.

14. An object control system according to one of the preceding claims, c h a r a c t e r i z e d  i n  t h a t the central control unit comprises a processor unit.

1/3

fig-1

fig-2

fig-3

Fig-4

3/3

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| A | US - A - 3 225 265 (S.R. KRAUSE et al.) <br><br> * Figures 7,9; column 3, lines 6-28 * | 1 |
| | DE - A - 1 939 876 (BECKER FLUG-FUNKWERK) <br><br> * Page 1; page 2, lines 1-2; page 3, lines 15-21; page 4; page 5, lines 1-5; page 6, lines 6-18; page 7, lines 6-20; page 9, lines 1-12 * | 1,2,9, 10,12 |
| | CH - A - 453 140 (W. MENZEL) <br><br> * Column 1, lines 16-36; column 2, lines 18-37; figure 1 * | 1,2,6 |
| | FUNKSCHAU, vol. 41, no. 22, November 1969, pages 801-802 München, DE. G.-P. VOSS: "Störsichere Funk-fernsteuerung für Garagentore" <br><br> * Page 801, column 2, section: "Der Sender"; figure 2 * | 2,6,7 |
| A | DE - A - 2 056 006 (STANDARD ELEK-TRIK LORENZ) <br><br> * Page 3, lines 2-13 * | 1 |
| | US - A - 3 371 316 (McVOY JOHNSON) <br><br> * Column 1; column 2, lines 1-54; figure 1 * | 1,9-11 |
| | ./. | |

**CLASSIFICATION OF THE APPLICATION (Int. Cl.)**

G 08 C 17/00
G 01 S 13/74

**TECHNICAL FIELDS SEARCHED (Int. Cl.)**

G 08 C 17/00
19/00
G 01 S 13/74
13/76
13/78
13/80

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-12-1980 | DOCKHORN |

EPO Form 1503.1  06.78

0026548

| Category | DOCUMENTS CONSIDERED TO BE RELEVANT | | CLASSIFICATION OF THE APPLICATION (Int. Cl. ³) |
|---|---|---|---|
| | Citation of document with indication, where appropriate, of relevant passages | Relevant to claim | |
| | DE - A - 2 807 887 (SCHWEIZERISCHE ALUMINIUM AG) <br> * Page 1, claims 1,2; page 4, paragraph 1; page 5, paragraph 3; page 10; figure 4 * | 1,9-11, 14 | |
| | US - A - 2 478 409 (B.D. LOUGHLIN) <br> * Column 2, lines 1-19 * | 1 | |
| | DE - A - 2 748 584 (NEDAP) <br> * Page 3, lines 1-16; page 4, lines 11-25 * | 10 | TECHNICAL FIELDS SEARCHED (Int. Cl. ³) |
| | DE - A - 2 625 017 (W. HOLZER) <br> * Figures; pages 5-10 * | 1, 10 | |
| A | DE - A - 2 747 388 (SIEMENS) <br> * In its entirety * | 10 | |
| A | US - A - 2 686 900 (W.W. RIGROD) <br> * Figure 1; columns 1,2 * | 1,2 | |
| A | US - A - 3 713 163 (G.C. KELLER et al.) <br> * Figure 3; column 4, lines 32-46 * | 1 | |
| A | US - A - 3 754 250 (J.N. BRUNER) <br> * Columns 1,2,4,5 * | 1, 10 | |
| A | US - A - 3 732 496 (M.L. BOYER) <br> * Abstract; column 1; column ./. | 1 | |

EPO Form 1503.2 06.78

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | 2, lines 1-11 * -- | | |
| A | DE - A - 2 211 313 (ROBERT BOSCH ELEKTRONIK) <br> * Page 3, line 5 - page 4, line 8 * -- | 1 | |
| P | GB - A - 2 019 071 (VOXSON) <br> * Page 1 * <br> & FR - A - 2 423 107 <br> & DE - A - 2 915 195 <br> ---- | 1,10 | TECHNICAL FIELDS SEARCHED (Int. Cl.³) |

EPO Form 1503.2  06.78